# EUROPÄISCHE PATENTSCHRIFT

(11) **EP 3 992 144 B1**
(45) Veröffentlichungstag und Bekanntmachung des Hinweises auf die Patenterteilung: **10.12.2025**
(21) Anmeldenummer: 20204633.0
(22) Anmeldetag: 29.10.2020
(51) Int. Cl.: C01B 11/02, B01J 19/24

(54) **VORRICHTUNG UND VERFAHREN ZUR HERSTELLUNG VON CHLORDIOXID**
DEVICE AND METHOD FOR THE PRODUCTION OF CHLORINE DIOXIDE
DISPOSITIF ET PROCÉDÉ DE PRODUCTION DE DIOXYDE DE CHLORE

(43) Veröffentlichungstag der Anmeldung: 04.05.2022
(73) Patentinhaber: Schmid, Bertram, 67435 Neustadt (DE)
(72) Erfinder: Schmid, Bertram, 67435 Neustadt (DE)
(74) Vertreter: Zellentin & Partner mbB Patentanwälte

(56) Entgegenhaltungen:
- CA-A1- 2 061 645
- DE-C- 967 375
- GB-A- 943 216

## Beschreibung

Die vorliegende Erfindung betrifft eine Vorrichtung und ein Verfahren zur Herstellung von Chlordioxid.

Chlordioxid ist eine chemische Verbindung von Chlor und Sauerstoff mit der Summenformel ClO₂. Bei Raumtemperatur ist Chlordioxid ein bernsteinfarbenes, explosives und giftiges Gas mit stechendem, chlorähnlichem Geruch.

Die Anwendungen von Chlordioxid beruhen auf seiner Wirkung als Oxidationsmittel. Es ist das wichtigste Bleichmittel der Elementar-Chlor-freien Bleiche von Zellstoff, insbesondere bei Papier, in der es elementares Chlor fast vollständig ersetzt hat. Zunehmend wird Chlordioxid auch zur Desinfektion in der Lebensmittelherstellung, z.B. bei der Abfüllung von PET-Flaschen verwendet. Weiterhin wird es in der Trinkwasseraufbereitung zur Desinfektion an Stelle von Chlor eingesetzt. Es ist gegen Bakterien genauso oder besser wirksam als Chlor und im Gegensatz zu Chlor auch gegen Viren und viele Protozoen (Einzeller) wirksam.

Zur Chlordioxiderzeugung können viele Verfahren verwendet werden. Am häufigsten ist die Verwendung von Salzsäure und Natriumchlorit als Ausgangskomponenten, da die Herstellung von Chlordioxid aus diesen beiden Komponenten von der Trinkwasserverordnung zugelassen ist. Die Umsetzung erfolgt nach der Gleichung:

5 NaClO₂ + 4 HCl → 4 ClO₂ + 5 NaCl + 2 H₂O

Es können aber auch andere Substanzen mit Natriumchlorit oder mit einem anderen Chlorit umgesetzt werden. Anstelle von Salzsäure eignen sich andere Säuren, wie Schwefelsäure bzw. Säurebildner wie Peroxodisulfate, z. B. Natrium-, Kalium- oder Ammoniumperoxodisulfat, hypochlorige Säure und andere. Statt Natriumchlorit können Chlorite mit anderen Kationen, z.B. Alkalichlorite und Erdalkalichlorite verwendet werden.

Chlordioxidgas kann auch aus Chloraten und Perchloraten hergestellt werden. Diese Umsetzung erfolgt z.B. bei Reaktion von Natriumperchlorat (erhältlich aus einer Elektrolyse von Natriumchlorid) mit Salzsäure nach der Gleichung:

2 NaClO₃ + 4 HCl → 2 ClO₂ + Cl₂ + 2 NaCl + 2 H₂O

Es gibt bereits viele Vorschläge für Vorrichtungen zur Herstellung von Chlordioxid. Die Schwierigkeiten liegen darin, eine möglichst vollständige Umsetzung in adäquater Zeit zu erhalten und dabei explosive Konzentrationen von Chlordioxidgas zu vermeiden. Das sind meist Gehalte bis maximal 20 000 ppm. Lösungen in Wasser sind nicht explosiv, sofern sie kein Chlordioxid-Luft-Gemisch mit mehr als 10 Vol.-% Chlordioxid erzeugen können. Beispiele für bekannte Vorrichtungen und Verfahren finden sich u.a. in DE 967 375 A, DE 31 28 817 A1, DE 32 18 475 A1, DE 32 39 029 A1, WO 2009/084854 A2, EP 2 662 328 A1, DE 10 2010 001 699 A1, US 6,051,135 A und EP 2 662 328 A1. Außerdem ist es bekannt, Chlordioxid aus festen, trockenen Zusammensetzungen zu erzeugen. Beispiele hierfür finden sich in WO 2012/019587 A1, EP 933 991 B1, US 4,547,381 A und US 2,482,891 A.

Da bei der Chlordioxid Herstellung korrosive Edukte, Produkte und Nebenprodukte involviert sind, ist die Auswahl an Materialien für die Vorrichtung begrenzt und auch die verwendbaren Pumpen und Dosiereinrichtungen müssen speziell ausgelegt sein. Beispielsweise wird bei Verfahren, die Unterdruck einsetzen, häufig eine Wasserstrahlpumpe bevorzugt, zur Dosierung sind häufig Kapillaren aus Glas im Einsatz. Ansonsten werden Schläuche und Pumpen, deren produktberührte Teile aus teil- und/oder perfluorierten Kunststoffen bestehen, verwendet.

Die bisherigen Vorschläge für Verfahren und Vorrichtungen werden in der Praxis bei einem kontinuierlichen Bedarf an Chlordioxid in größeren Mengen als umständlich wahrgenommen, da es sehr lange dauert, das giftige und potentiell explosive Chlordioxidgas quantitativ von der Reaktionslösung abzutrennen und damit auch eine gefahrloses Entsorgung der Reaktionslösung zu ermöglichen. Zumeist erfolgt die Abtrennung durch das Begasen mit Luft, z.B. über ein Einleitungsrohr oder eine Fritte. Der Zeitraum bis zur quantitativen Aufreinigung des Chlordioxids begrenzt dabei die erreichbaren Kapazitäten bei den bekannten Systemen. Für eine Umwälzung der Reaktionslösung müssen aufgrund der Korrosivität der Edukte und des Produkts Chlordioxid sehr teure Pumpen mit Medienberührten Teilen aus fluorierten Materialien verwendet werden, die einen hohen Wartungsbedarf haben um die Betriebssicherheit zu gewährleisten. Es besteht somit weiterhin die Aufgabe, einfachere und damit kostengünstigere und fehlerresistentere Systeme zu finden und die Abtrennung des Reaktionsprodukts Chlordioxid zu beschleunigen um die Anlagensicherheit zu erhöhen.

Überraschend wurde nun gefunden, dass eine als Mischluftwasserheber zum Fördern von Wasser bekannte Vorrichtung als sehr einfache und kostengünstige Pumpe zum Umwälzen von Gas und Flüssigkeit unter gleichzeitger Desorption von Gas verwendet werden kann, ohne dass mechanisch bewegte Teile notwendig sind. Das von Gas durchsprudelte Reaktorrohr ermöglicht aufgrund der enormen Oberfläche ein viel schnelleres Entgasen der Reaktionslösung im Vergleich mit bisher bekannten Systemen. Dadurch wird wiederum die Anlagenkapazität deutlich erhöht. Ein solches System ist auch als Mammutpumpe bekannt und wird außerdem als Airliftreaktor und als Blasenpumpe genutzt. Bei einer Mammutpumpe wird ein relativ großer Gasstrom in ein relativ enges Rohr gepumpt, in welchem eine Flüssigkeit mit einem Reservoir der Flüssigkeit außerhalb, z.B. einem zweiten Schenkel eines U-Rohrs, in Verbindung steht. Die geringere Dichte der Gas-Flüssigkeitsmischung im Rohr lässt diese im Vergleich zur Flüssigkeit im korrespondierenden Reservoir nach oben steigen. Das Prinzip Mammutpumpe wird in der Praxis zum Fördern von feststoffhaltigen Flüssigkeiten genutzt, z.B. zum Pumpen von mikroorganismen- oder belebtschlammhaltigem Abwasser oder zum Umwälzen von Aquariumwasser. Blasenpumpen nutzen anstelle des mittels einer Pumpe eingeführten Gases den durch Erhitzen der Flüssigkeit entstehenden Dampf, ein Beispiel hierfür sind Kaffeemaschinen. Airliftreaktoren dienen als Bioreaktoren, bei denen die Mikroorganismen enthaltende Reaktionsflüssigkeit mit einer großen Menge Gas, meist Sauerstoff, in Kontakt gebracht werden muss. Der Gasstrom gewährleistet dabei zugleich die Zufuhr des Gases sowie eine sehr intensive und zugleich schonende Durchmischung. Die vorliegende Erfindung kombiniert die Prinzipien der Mammutpumpe und des Airliftreaktors, indem wie bei der Mammutpumpe die Reaktionsflüssigkeit gepumpt wird wobei analog zum Airliftreaktor die gute Durchmischung ausgenutzt wird. Erfindungsgemäß ist nicht die schonende bzw. Feststoffe tolerierende Förderung wichtig, sondern die Mischung, Entgasung und Förderung ohne dass eine mechanische Pumpe Medienkontakt hat. Durch die von der Mammutpumpe erzeugte große Grenzfläche Gas-Flüssigkeit lässt sich das Chlordioxid in kürzester Zeit aus der Reaktionslösung extrahieren/strippen.

Die vorliegende Erfindung löst somit die genannten Probleme durch eine Vorrichtung zur Herstellung von Chlordioxid umfassend einen zweischenkeligen Reaktor, der eine im Verhältnis zur Schenkelhöhe geringe Querschnittsfläche der Schenkel aufweist, wobei die Schenkel oben und unten verbunden sind, einen Gaseinlass am unteren Ende eines Schenkels, einen Gasauslass im oberen Bereich des zweiten Schenkels, eine Verbindung der Schenkel, einen Edukteinlass am oberen Ende des ersten oder zweiten Schenkels, einen Flüssigkeitsauslass am unteren Ende des Reaktors, eine Absorptionsvorrichtung mit einer Wasserzufuhr, einem Gaseintritt und einem Gasaustritt, und eine Pumpe zur Umwälzung eines Gases von der Pumpe über den Gaseinlass durch den ersten Schenkel zum Gasauslass und weiter zum Gaseintritt der Absorptionsvorrichtung, durch diese zum Gasaustritt und zur Pumpe, wobei Schenkeldurchmesser, Schenkelhöhe, Flüssigkeitspegel und Gasstrom so abstimmbar sind, dass eine stabile Flüssigkeitsförderung im Reaktor einstellbar ist. Die Aufgabe wird außerdem durch ein Verfahren zur Herstellung von Chlordioxid gelöst, bei dem Edukte zur Umsetzung zu Chlordioxid oben in einen Schenkel eines zweischenkeligen Reaktors, der eine im Verhältnis zur Schenkelhöhe geringe Querschnittsfläche der Schenkel aufweist, wobei die Schenkel oben und unten verbunden sind, eingeführt werden, Gas unten in den ersten Schenkel gepumpt wird und im oberen Bereich des zweiten Schenkels abgeführt wird, wobei die Menge Gas so bemessen wird, dass die Flüssigkeit durch den Gasstrom im Reaktor umgewälzt wird und das Gas mit gebildetem Chlordioxid aus dem Reaktor in eine Absorptionsvorrichtung geführt wird, wo enthaltenes Chlordioxid in Wasser gelöst wird und das von Chlordioxid getrennte Gas von der Absorptionsvorrichtung in die Pumpe zurückströmt.

Der starke Gasstrom erreicht eine sehr effiziente Austragung des gebildeten Chlordioxid, wobei trotzdem eine von der Leistung her kleine und von den Materialien her günstige Pumpe benutzt werden kann, da im wesentlichen weder Chlordioxid noch Edukte und Nebenprodukte in die Pumpe gelangen. Die Auslegung der Vorrichtung erfordert eine Abstimmung von Schenkeldurchmesser, Schenkelhöhe, Flüssigkeitspegel und Gasstrom. Theoretische Details und Formeln zu Berechnung finden sich in W. Maltry, "Zur Dimensionierung von Mammutpumpen", Deutsche Agrartechnik 18, 1968, S. 233 - 235. Die erfindungsgemäße Vorrichtung wird so betrieben, dass sich eine stabile Flüssigkeitsförderung einstellt. Der in der Veröffentlichung empfohlene Betrieb zwischen dem Punkt optimalen Wirkungsgrades und maximaler Flüssigkeitsförderung ist jedoch nicht notwendig.

Als Edukte sind im Prinzip alle zur Bildung von Chlordioxid bekannten Reaktionspartner geeignet. Die Auswahl erfolgt in erster Linie nach Preis und Verfügbarkeit, daneben spielen auch die Dosierbarkeit und die Nebenprodukte eine Rolle. Außerdem hängt die Wahl der Edukte davon ab, wofür das Chlordioxid benutzt werden soll, so ist z.B. für die Desinfektion von Trinkwasser besonders reines Chlordioxid nötig. Folglich sollten die Edukte keine gasförmigen Nebenprodukte ergeben. Hierfür und für andere Anwendungen mit entsprechenden Anforderungen an die Reinheit sind daher Lösungen von Chlorit und Säure als Edukte bevorzugt. Gut geeignet sind z.B. Salzsäure und Alkalichlorit, insbesondere Natriumchlorit.

Die Konzentration der Edukte wird auf den Reaktor abgestimmt. Zu hohe Konzentrationen an Chlordioxid, d.h. in der Regel potentiell mehr als 10 Vol.-% Chlordioxid in der Gasphase, die bei normaler Umgebungstemperatur ab einer Konzentration von 10 g Chlordioxid pro Liter Wasser entstehen können, müssen vermieden werden, was die Konzentration bzw. Zulaufgeschwindigkeit der Edukte begrenzt. Andererseits wird für die Umsetzung von gering konzentrierten Edukten mehr Zeit benötigt bzw. die Ausbeute Chlordioxid pro Zeiteinheit ist geringer, so dass die Konzentrationen auch nicht zu gering sein sollten. In der Praxis lassen sich beispielsweise von 0,1 bis 1,5 mol/l Chlorit bei Schenkelquerschnittsflächen des Reaktors im Bereich von 1 bis 30 cm² gut beherrschen. Beispielsweise lässt sich eine Eduktkonzentrationen von Natriumchlorit bis 3,5 Gew.-% bei 1:1 Dosierung zur Säure (1,75 Gew.-% in der Reaktionslösung) ohne Überwachung des Gasstroms handhaben. Für höhere Konzentrationen muss die Dosierung mit der Austraggeschwindigkeit abgestimmt werden.

Die Eduktdosierung erfolgt vorzugsweise über Dosierpumpen. Bei einem kontinuierlichen Betrieb wird vorzugsweise eine Sicherheitsschaltung vorgesehen, welche die Dosierung der Edukte stoppt, wenn die Pumpe zum Umwälzen des Gases ausfällt oder andere definierte Zustände, z.B. Ausfall einer Eduktdosierung oder der Wasserzufuhr in die Absorptionsvorrichtung, eintreten. Andere Arten der Dosierung sind ebenso möglich, z.B. über die Schwerkraft und Kapillaren, vorzugsweise mit Absperrventilen.

Die Konzentration der Edukte wird wie bereits erwähnt so begrenzt, dass unter den eingestellten Bedingungen von Gasstrom, Wasserzufuhr usw. keine explosionsgefährlichen Konzentrationen Chlordioxid gebildet werden. Andererseits wird eine möglichst hohe Konzentration angestrebt, um pro Zeiteinheit möglichst viel Chlordioxid herstellen zu können. In der Regel wird ein Säureüberschuss verwendet, aber auch äquimolare Mengen Edukte oder ein geringer Chloritüberschuss sind möglich. Vorzugsweise werden von 0,05 bis 5 mol/l Chlorit, besonders bevorzugt von 0,1 bis 3 mol/l und am meisten bevorzugt von 0,2 bis 1,5 mol/l Chlorit eingesetzt. Das Mol-Verhältnis Chlorit: Säure beträgt vorzugsweise von 1:1 bis 1:5, besonders bevorzugt von 1:2 bis 1:4, am meisten bevorzugt von 1:2,5 bis 1:3,5. Die Angaben in diesem Absatz beziehen sich auf einwertige Edukte. Wenn zwei- oder höherwertige Edukte eingesetzt werden, sind die Mengen entsprechend der Wertigkeit anzupassen, es sei denn, es reagieren nicht alle Wertigkeiten.

Für die Herstellung von geringen Mengen Chlordioxid ist ein chargenweiser Betrieb möglich, bei dem die Edukte nacheinander oder vorvermischt auf einmal in den Reaktor eingefüllt werden. Hierbei wird die Flüssigkeit auch erst auf einmal nach Abschluss der Umsetzung und Ausgasung des Chlordioxid abgelassen. In der Regel ist eine kontinuierliche Eduktzufuhr bevorzugt, wobei die Abfuhr der Flüssigkeit kontinuierlich oder chargenweise erfolgen kann. Für einen kontinuierlichen Betrieb ist es bevorzugt, mehrere zweischenkelige Reaktoren in Reihe zu schalten, beispielsweise zwei, drei, vier, fünf, sechs, sieben oder noch mehr, besonders bevorzugt drei, vier oder fünf.

Das Gas ist vorzugsweise Luft, jedoch sind auch alle anderen oxidationsstabilen Gase möglich, beispielsweise Kohlendioxid oder Stickstoff. Luft ist jedoch besonders einfach und kostengünstig. Erforderlichenfalls kann gereinigte Luft benutzt werden.

Außerdem ist es vorteilhaft, wenn die Vorrichtung einen Druckausgleichsmechanismus besitzt. Bevorzugt wird hierfür ein Aktivkohlefilter verwendet, der zugleich das System vor dem Eintrag von Verunreinigungen schützt und geringe Restmengen Chlordioxid zurückhält.

Der erfindungsgemäße Reaktor hat zwei Schenkel, deren Querschnittsfläche im Vergleich zur Höhe gering ist. Beispielsweise eignen sich Verhältnisse von Querschnittsfläche zu Höhe im Bereich von 0,001 bis 0,2 Längeneinheiten, vorzugsweise von 0,01 bis 0,1 Längeneinheiten und besonders bevorzugt von 0,02 bis 0,05. Das entspricht z.B. Querschnittsflächen von 0,5 bis 20 cm² (Durchmesser von 0,8 bis 5 cm) bei Höhen von 10 bis 500 cm. Besonders bevorzugt sind Reaktorschenkelquerschnittsflächen von 1 bis 10 cm² bei Höhen von 50 bis 120 cm, insbesondere 2 bis 5 cm² Querschnitt und Höhen von 70 bis 100 cm.

Die Schenkel können Rohre mit rundem, ovalem oder eckigem, z.B. quadratischen oder rechteckigem, vorzugsweise rundem, Querschnitt sein. Als Material eigenen sich besonders Glas oder oxidationsstabile und wärmebeständige Kunststoffe wie PVC und Teflon.

Der Ruhe-Flüssigkeitspegel der Edukte in den Schenkeln wird zweckmäßig auf etwa ½ bis ¾ der Schenkelhöhe eingestellt. Dies erfolgt bei einem chargenweisen Betrieb durch Einlass entsprechender Mengen Edukte. Bei einem kontinuierlichen Betrieb erfolgt eine entsprechende Abstimmung der Zulaufmengen der Edukte mit der Ablaufmenge der Reaktionslösung.

Als Absorptionsvorrichtung wird üblicherweise ein Waschturm eingesetzt. Beispielsweise eignet sich ein - vorzugsweise mit Füllkörpern wie Glaskugeln oder Raschigringen gefülltes - Rohr. Das Rohr kann von rundem, ovalem oder eckigem, z.B. quadratischen oder rechteckigem, vorzugsweise rundem, Querschnitt sein. Als Material eigenen sich besonders Glas oder oxidationsstabile und wärmebeständige Kunststoffe wie PVC und Teflon. In der Absorptionsvorrichtung wird das Chlordioxid enthaltende Gas aus dem Reaktor von unten eingeführt, während von oben Wasser zugeführt wird. Das Wasser kann durch eine Öffnung zufließen, oder es wird über mehrere Öffnungen zugeführt oder es wird eingesprüht. Die Wassermenge und Größe der Absorptionsvorrichtung wird so auf die Chlordioxidmenge und Gasgeschwindigkeit abgestimmt, dass sich im Wesentlichen das komplette Chlordioxid in dem Wasser löst. Da die Löslichkeit von Chlordioxid in Wasser sehr hoch ist und der Lösungsvorgang schnell verläuft, wird keine große Absorptionsvorrichtung und Wassermenge benötigt. Für die o.g. Reaktorabmessungen war eine Wassermenge im Bereich von 30 bis 1000 l/h, vorzugsweise von 30 bis 300 l/h, in der Absorptionsvorrichtung gut geeignet.

Die Absorptionsvorrichtung besitzt am unteren Ende einen Auslass, vorzugsweise einen Siphon, über den die hergestellte Chlordioxidlösung ausgelassen wird. Es wird eine der zugeführten Wassermenge entsprechende Menge Chlordioxidlösung erhalten, typischerweise mit einer Konzentration im Bereich von 100 mg/l bis 3000 mg/l, vorzugsweise von 400 mg/l bis 1000 mg/l. Die Lösung kann z.B. in einen Vorratsbehälter geleitet und dort gelagert werden oder sie wird direkt benutzt, z.B. einem Trinkwassersystem zugeführt. In den Vorratsbehälter können, soweit es die Anwendung der Chlordioxidlösung zulässt, auch Substanzen zur Stabilisierung von Chlordioxid eingebracht werden. Eine besonders reine Chlordioxidlösung ist jedoch oft die wirksamste Stabilisierung.

Das am Gasaustritt der Absorptionsvorrichtung abgezogene Gas enthält kein Chlordioxid bzw. nur vernachlässigbare Mengen wie z.B. weniger als 1 ppm, insbesondere weniger als 0,05 ppm. Es hat somit keine korrosiven oder oxidierenden Eigenschaften, so dass sich einfache Pumpen einsetzen lassen. Geeignet ist z.B. eine Luftumwälzpumpe mit einer Pumpenmembran aus EPDM, das mit einer dünnen PTFE-Schicht beschichtet ist. Eine brauchbare Leistung beträgt z.B. von 100 bis 6000 l/h, vorzugsweise 400 bis 1000 l/h oder 1000 bis 3000 l/h, je nach benötigtem Gasstrom.

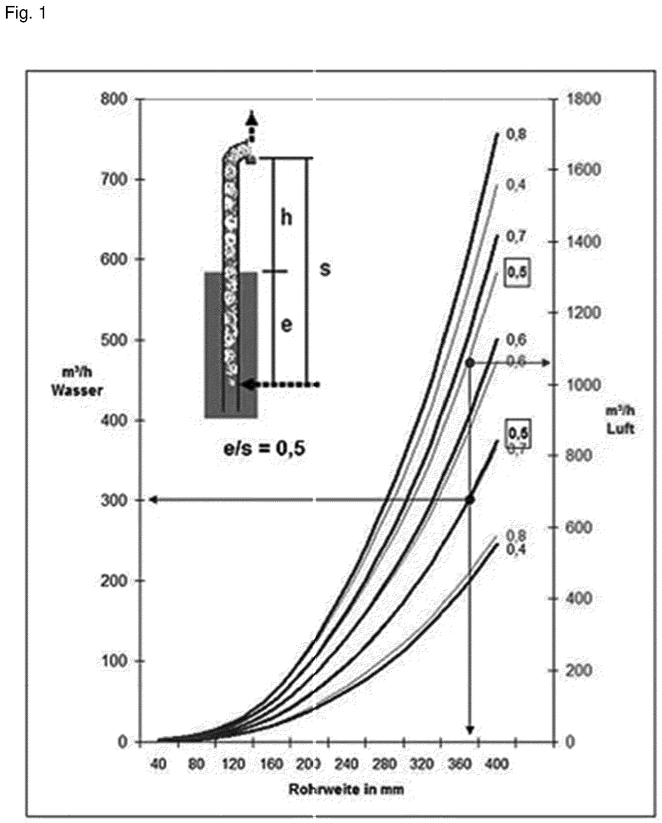

Der von der Pumpe erzeugte Gasstrom wird so bemessen, dass die Flüssigkeit im Reaktor umgepumpt wird. Hierbei spielen der Durchmesser des Reaktorschenkels, die Höhendifferenz zwischen Gaseinlass und oberem Ende des ersten Schenkels sowie zwischen Gaseinlass und Ruhepegel der Flüssigkeit im Reaktor eine Rolle. Figur 1 zeigt eine in Wikipedia reproduzierte Darstellung für Schenkel mit 40 cm und mehr Durchmesser, aus der sich das Zusammenwirken entnehmen lässt. Details sind z.B. dem zuvor genannten Artikel von W. Maltry zu entnehmen. Dies zeigt, dass sich der erfindungsgemäße Reaktor und das erfindungsgemäße Verfahren von den bekannten Vorrichtungen und Verfahren mit einem Durchleiten von Luft zum Austreiben des Chlordioxid wesentlich unterscheiden. Bei allen bisherigen Vorschlägen wurde im Verhältnis zur Reaktorquerschnittsfläche ein viel geringerer Gasstrom verwendet, da dieser nicht zum Umpumpen der Flüssigkeit bestimmt war. Ebenso gilt, dass erst das Prinzip Mammutpumpe entsprechend hohe Gasströme ermöglicht, da bisher ein Überschäumen und noch viel mehr ein Überlaufen auf jeden Fall vermieden werden musste. Bei den zuvor genannten Reaktordimensionen waren erfindungsgemäß Gasströme von 200 bis 800 l/h, vorzugsweise 400 bis 600 l/h, gut geeignet. Für abweichende Durchmesser und Schenkelhöhen sowie Flüssigkeitspegel muss eine entsprechende Anpassung erfolgen. Diese kann der Fachmann entweder experimentell oder rechnerisch bestimmen.

Wie zuvor erwähnt wird für die Herstellung größerer Mengen Chlordioxid bevorzugt eine Kaskade mit mehreren zweischenkeligen Reaktoren, die eine gemeinsame Eduktzufuhr, Pumpe und Absorptionsvorrichtung haben, eingesetzt. Hierbei ist die Pumpe an den Gaseinlass des ersten Reaktors angeschlossen während die Eduktzufuhr und Absorptionsvorrichtung an den letzten Reaktor angeschlossen sind. Das Gas aus dem Gasauslass des ersten Reaktors wird in den Gaseinlass des zweiten Reaktors geführt usw., die Edukte werden dem letzten Reaktor zugeführt, die Flüssigkeit aus dem letzten Reaktor wird in den vorletzten Reaktor geleitet usw., und die vollständig umgesetzte und entgaste Flüssigkeit aus dem ersten Reaktor abgeführt.

Vorzugsweise werden die Edukte und das Wasser über elektrisch angetriebene Dosierventile zugeführt, so dass mit einer Steuerung überwacht werden kann, dass Gasstrom, Edukt- und Wasserzufuhr in einem geeigneten Verhältnis stehen. Bei einem Ausfall der Pumpe oder der Wasserzufuhr oder einer der Eduktzuströme wird zweckmäßig eine Notabschaltung durchgeführt. So kann die Bildung gefährlicher Chlordioxidkonzentrationen vermieden und der Austritt von größeren Mengen nicht umgesetzter Edukte verhindert werden.

Die Erfindung soll anhand der folgenden Figuren und Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

In den Figuren zeigt
Fig. 1 ein Nomogramm für den Betrieb von Mammutpumpen
Fig. 2 eine erste Ausführungsform der erfindungsgemäßen Vorrichtung und
Fig. 3 eine zweite Ausführungsform.

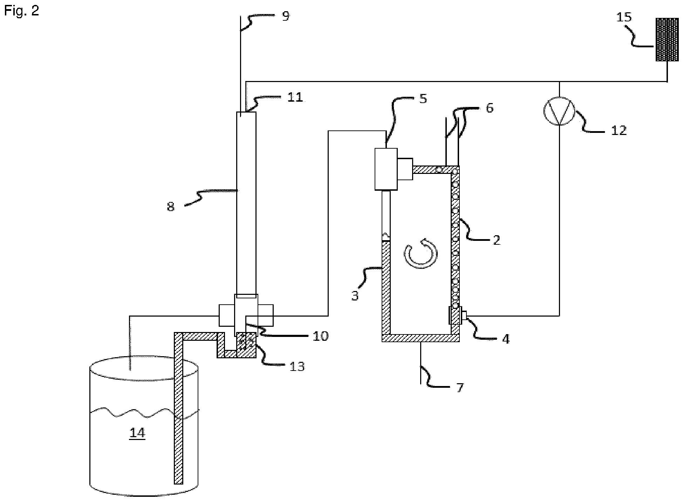

In Figur 2 ist ein zweischenkeliger Reaktor 1 gezeigt, der einen ersten Schenkel 2 und einen zweiten Schenkel 3 aufweist. Der Reaktor 1 hat außerdem einen Gaseinlass 4 am unteren Ende des ersten Schenkels 2, einen Gasauslass 5 im oberen Bereich des zweiten Schenkels 3, eine Verbindung V der Schenkel, einen Edukteinlass 6 am oberen Ende des ersten Schenkels 2, einen Flüssigkeitsauslass 7 am unteren Ende des ersten Schenkels 2, eine Absorptionsvorrichtung 8 mit einer Wasserzufuhr 9, einem Gaseintritt 10, einem Gasaustritt 11 und einem Produktauslass 13, und eine Pumpe 12 zur Umwälzung eines Gases von der Pumpe 12 über den Gaseinlass 4 durch den ersten Schenkel 2 zum Gasauslass 5 im oberen Bereich des zweiten Schenkels 3, weiter zum Gaseintritt 10 der Absorptionsvorrichtung 8, durch diese zum Gasaustritt 11 und zur Pumpe 12. Die Absorptionsvorrichtung 8 ist ein Waschturm mit einem Siphon 13 als Produktauslass zum Ausleiten der Chlordioxidlösung. Die Produktlösung wird in einem Vorratsbehälter 14 eingelagert. Zum Druckausgleich ist der Vorratsbehälter 14 mit dem unteren Ende der Absorptionsvorrichtung 8 verbunden. Außerdem ist als Druckausgleich für die Vorrichtung ein Aktivkohlefilter 15 vorgesehen.

Die Ausführungsform in Figur 2 eignet sich besonders für den Chargenbetrieb. Im Betrieb werden z.B. Salzsäure und Natriumchloritlösung in etwa äquimolarer Menge oder vorzugsweise mit einem Säureüberschuss von etwa 1:3 als Edukte über den Edukteinlass 6 in den ersten Schenkel 2 des Reaktors 1 eingefüllt. Der Flüssigkeitspegel der Edukte wird zweckmäßig auf etwa ½ bis ¾ der Schenkelhöhe eingestellt. Die Pumpe 12 wird dann gestartet und leitet z.B. Luft als Gas in den Gaseinlass 4 ein. Dabei wird der Luftstrom so geregelt, dass er die Flüssigkeit in dem ersten Schenkel nach oben pumpt, bis sie über die Verbindung V in den zweiten Schenkel 3 fließt. Dabei trennen sich Luft und Flüssigkeit. Die Luft, in der das aus der Flüssigkeit ausgetriebene Chlordioxid enthalten ist, strömt über den Gasauslass 5 und den Gaseintritt 10, hier einen Schlauch, in den Siphon 13 der Absorptionsvorrichtung 8. Von dort strömt die Luft im Gegenstrom mit dem durch die Wasserzufuhr 9 eingebrachten Wasser durch den Waschturm 8 nach oben. Das Wasser löst das enthaltene Chlordioxid aus der Luft und strömt über den Siphon 13 in den Vorratsbehälter 14. Die vom Chlordioxid getrennte Luft wird aus dem Gasaustritt 11 in die Pumpe 12 geführt und von da wieder in den Gaseinlass 4. Nachdem die Umsetzung der Edukte vollständig und das Chlordioxid aus der Flüssigkeit im Reaktor ausgetrieben ist, werden die Wasserzufuhr 9 und die Pumpe 12 abgestellt und die Flüssigkeit, die im Wesentlichen nur noch Natriumchlorid und ggf. den Säureüberschuss enthält, wird über den Auslass 7 abgelassen, z.B. direkt in die Kanalisation.

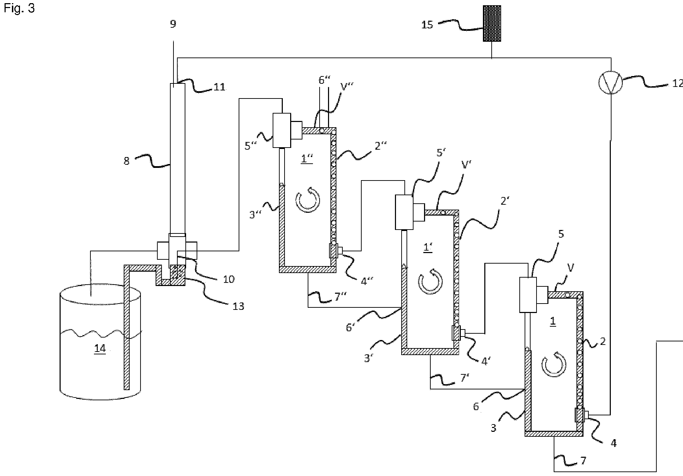

In Figur 3 ist eine besonders für den kontinuierlichen Betrieb geeignete Vorrichtung gezeigt, wobei analoge Teile mit den gleichen Bezugsziffern wie in Figur 2 versehen sind. Die Vorrichtung umfasst drei zweischenkelige Reaktoren 1, 1' und 1". Diese haben jeweils einen Gaseinlass 4, 4' und 4", einen Gasauslass 5, 5' und 5", sowie erste Schenkel 2, 2', 2", zweite Schenkel 3, 3' und 3", Edukteinlässe 6, 6', 6" und Flüssigkeitsauslässe 7, 7', 7". Die Vorrichtung besitzt nur eine Pumpe 12 und einen Waschturm 8 als Absorptionsvorrichtung, sowie einen Aktivkohlefilter 15 und Vorratsbehälter 14. Pumpe 12 und Absorptionsvorrichtung 8 arbeiten genauso wie für Figur 2 beschrieben. Allerdings erfolgt bei der Vorrichtung in Figur 3 eine kontinuierliche Eduktzufuhr über den Edukteinlass 6" und ein kontinuierlicher Flüssigkeitsaustrag über den Auslass 7. Die Flüssigkeitsvolumina der zugeführten Edukte und der abgelassenen Flüssigkeit werden gleich eingestellt und die Zulaufgeschwindigkeit so geregelt, dass sich ein Ruhepegel der Flüssigkeit in den Reaktoren 1, 1', 1" von etwa ½ bis ¾ der Schenkelhöhe ergibt. Luft wird in den Einlass 4 des Reaktors 1 gepumpt, verlässt mit Chlordioxid angereichert dessen zweiten Schenkel 3 am Gasauslass 5 und wird von dort in den Gaseinlass 4' des zweiten Reaktors 1' eingeführt. Dort nimmt die Luft weiteres Chlordioxid aus der dort höher konzentrierten Flüssigkeit im Schenkel 2' auf und gelangt über den Gasauslass 5' in den Gaseinlass 4" des dritten Reaktors 1". In diesem wird weiteres Chlordioxid aufgenommen und dann im Waschturm 8 in dem über die Zufuhr 9 eingeleiteten Wasser gelöst. Die Edukte nehmen den umgekehrten Weg. Sie strömen in den Edukteinlass 6" in den letzten Reaktor 1" ein, und über die Flüssigkeitsauslässe 7" bzw. 7' in die Edukteinlässe 6' bzw. 6 der Reaktoren 1' und 1.

In dieser Ausführungsform werden die Edukte und das Wasser über elektrisch angetriebene Dosierventile zugeführt, so dass mit einer (nicht gezeigten) Steuerung überwacht werden kann, dass Gasstrom, Edukt- und Wasserzufuhr in einem geeigneten Verhältnis stehen. Bei einem Ausfall der Pumpe 12 oder der Wasserzufuhr 9 oder einer der Eduktzuströme wird eine Notabschaltung durchgeführt.

### Beispiel 1

In eine Vorrichtung entsprechend Figur 2 wurden 200 ml 3,5-%ige, wässrige Natriumchloritlösung und 200 ml 4,5 %-ige Salzsäure eingefüllt. Die Pumpe wurde angeschaltet und pumpte 10 Minuten lang Luft mit einer Geschwindigkeit von 420 l/h durch den Reaktor. In dieser Zeit wurden 0,7 ml/min. Wasser in den Waschturm 8 geleitet. Man erhielt so 7 l Chlordioxidlösung mit einer Konzentration von 0,48 mg/l, das entspricht ca. 84 % Ausbeute.

Das Beispiel zeigt, dass sich eine viel bessere Durchmischung der Reaktionslösung und Desorption von Chlordioxid ergibt. Bereits nach 10 Minuten war die Reaktionslösung farblos, d.h. im wesentlichen alles Chlordioxid ausgegast. Dies benötigt in herkömmlichen Reaktoren mit einem die Flüssigkeit nicht umwälzenden Luftstrom 30 Minuten. Folglich erhält man mit der Vorrichtung und dem Verfahren gemäß der Erfindung eine erhöhte Leistung. Die verbrauchte Flüssigkeit enthält viel weniger Chlordioxid als in bisherigen Vorrichtungen. Somit ist die Entsorgung unproblematisch. Die Produktlösung enthält wie bei vorherigen Vorschlägen auch reines Chlordioxid, keine Edukte oder Nebenprodukte. Die Vorrichtung ist wesentlich günstiger als bisherige Anlagen, da für die Umwälzung von Chlordioxid-haltigen Flüssigkeiten spezielle, korrosionsbeständige Pumpen nötig wären. Die Mammutpumpe erlaubt eine sehr schnelle Umwälzung und erreichte im Beispiel eine Umwälzleistung von ca. 144 l/h, die 400 ml Flüssigkeit im Reaktor wurden ca. 6 mal pro Minute umgewälzt. Eine chlordioxidbeständige Pumpe für direkten Medienkontakt mit dieser Leistung kostet ca. 2500 € und muss regelmäßig gewartet werden. Die Mammutpumpe wird nur durch den Gasstrom angetrieben und somit hat die den Gasstrom bewegende Pumpe selber keinen Medienkontakt.

### Bezugszeichenliste

- 1, 1', 1": Reaktor
- 2, 2', 2": erster Schenkel
- 3, 3', 3": zweiter Schenkel
- 4, 4', 4": Gaseinlass
- 5, 5', 5": Gasauslass
- 6, 6', 6": Edukteinlass
- 7, 7', 7": Flüssigkeitsauslass
- V, V', V": Verbindung zwischen erstem und zweitem Schenkel
- 8: Absorptionsvorrichtung
- 9: Wasserzufuhr
- 10: Gaseintritt
- 11: Gasaustritt
- 12: Pumpe
- 13: Siphon
- 14: Vorratsbehälter
- 15: Aktivkohlefilter

## Patentansprüche

1. Vorrichtung zur Herstellung von Chlordioxid umfassend einen zweischenkeligen Reaktor (1, 1', 1"), der eine im Verhältnis zur Schenkelhöhe geringe Querschnittsfläche der Schenkel (2, 2', 2", 3, 3', 3") aufweist, wobei die Schenkel oben und unten verbunden sind, einen Gaseinlass (4, 4', 4") am unteren Ende eines ersten Schenkels (2, 2', 2"), einen Gasauslass (5, 5', 5") im oberen Bereich des zweiten Schenkels (3, 3', 3"), eine Verbindung (V, V', V") der Schenkel (2, 2', 2", 3, 3', 3"), einen Edukteinlass (6, 6', 6") am oberen Ende des ersten oder zweiten Schenkels (2, 2', 2", 3, 3', 3"), einen Flüssigkeitsauslass (7, 7', 7") am unteren Ende des Reaktors (1, 1', 1"), eine Absorptionsvorrichtung (8) mit einer Wasserzufuhr (9), einem Gaseintritt (10), einem Gasaustritt (11) und einem Produktauslass (13), und eine Pumpe (12) zur Umwälzung eines Gases von der Pumpe (12) über den Gaseinlass (4') durch den ersten Schenkel (2) zum Gasauslass (5) und weiter zum Gaseintritt (10) der Absorptionsvorrichtung (8), durch diese zum Gasaustritt (11) und zur Pumpe (12), wobei Schenkeldurchmesser, Schenkelhöhe, Flüssigkeitspegel und Gasstrom so abstimmbar sind, dass eine stabile Flüssigkeitsförderung im Reaktor (1, 1', 1") einstellbar ist.

2. Vorrichtung gemäß Anspruch 1, **dadurch gekennzeichnet, dass** elektrisch angetriebene Dosierventile zur Eduktdosierung vorhanden sind, vorzugsweise mit einer Sicherheitsschaltung, welche die Dosierung der Edukte stoppt, wenn die Pumpe (12) zum Umwälzen des Gases oder eine Eduktdosierung oder die Wasserzufuhr (9) in die Absorptionsvorrichtung (8) ausfällt.

3. Vorrichtung gemäß Anspruch 1 oder 2, **dadurch gekennzeichnet, dass** mehrere zweischenkelige Reaktoren (1, 1', 1") in Reihe geschaltet sind, bevorzugt zwei, drei oder vier, wobei die Pumpe (12) mit dem ersten Reaktor (1) und die Absorptionsvorrichtung (8) mit dem letzten Reaktor (1") verbunden ist.

4. Vorrichtung gemäß Anspruch 1, 2 oder 3, **dadurch gekennzeichnet, dass** die Vorrichtung einen Druckausgleichsmechanismus (15) besitzt, bevorzugt einen Filter, insbesondere einen Aktivkohlefilter.

5. Vorrichtung gemäß einem der Ansprüche 1 bis 4, **dadurch gekennzeichnet, dass** die Schenkel (2, 2', 2", 3, 3', 3") Verhältnisse von Querschnittsfläche zu Höhe im Bereich von 0,001 bis 0,2 Längeneinheiten, vorzugsweise von 0,01 bis 0,1 Längeneinheiten und besonders bevorzugt von 0,02 bis 0,05 aufweisen.

6. Vorrichtung gemäß einem der Ansprüche 1 bis 5, **dadurch gekennzeichnet, dass** die Schenkel (2, 2', 2", 3, 3', 3") Querschnittsflächen von 0,5 bis 20 cm², vorzugsweise 1 bis 10 cm², insbesondere 2 bis 5 cm², bei Höhen von 10 bis 500 cm, vorzugsweise von 50 bis 120 cm, insbesondere von 70 bis 100 cm, aufweisen.

7. Vorrichtung gemäß einem der Ansprüche 1 bis 6, **dadurch gekennzeichnet, dass** die Schenkel (2, 2', 2", 3, 3', 3") Rohre mit rundem, ovalem oder eckigem, vorzugsweise rundem, Querschnitt sind und/oder aus Glas oder oxidationsstabilem und wärmebeständigem Kunststoff, insbesondere aus PVC oder Teflon, sind.

8. Vorrichtung gemäß einem der Ansprüche 1 bis 7, **dadurch gekennzeichnet, dass** die Absorptionsvorrichtung (8) ein Waschturm ist, vorzugsweise ein mit Füllkörpern wie Glaskugeln oder Raschigringen gefülltes Rohr.

9. Vorrichtung gemäß einem der Ansprüche 1 bis 8, **dadurch gekennzeichnet, dass** die Wasserzufuhr (9) von einer oder mehreren Öffnungen oder von einer Düse gebildet wird.

10. Vorrichtung gemäß einem der Ansprüche 1 bis 9, **dadurch gekennzeichnet, dass** die Absorptionsvorrichtung (8) als Produktauslass (13) einen Siphon, aufweist.

11. Verfahren zur Herstellung von Chlordioxid, **dadurch gekennzeichnet, dass**
- Edukte zur Umsetzung zu Chlordioxid oben in einen Schenkel eines zweischenkeligen Reaktors, der eine im Verhältnis zur Schenkelhöhe geringe Querschnittsfläche der Schenkel aufweist, wobei die Schenkel oben und unten verbunden sind, eingeführt werden,
- Gas unten in einen ersten Schenkel gepumpt wird, und im oberen Bereich des zweiten Schenkels abgeführt wird,
- wobei die Menge Gas so bemessen wird, dass die Flüssigkeit durch den Gasstrom im Reaktor umgewälzt wird und
- das Gas mit gebildetem Chlordioxid aus dem Reaktor in eine Absorptionsvorrichtung geführt wird, wo enthaltenes Chlordioxid in Wasser gelöst wird und
- das von dem Chlordioxid getrennte Gas von der Absorptionsvorrichtung in die Pumpe zurückströmt.

12. Verfahren gemäß Anspruch 11, **dadurch gekennzeichnet, dass** als Edukte Lösungen von Chlorit und Säure, bevorzugt Salzsäure und wässriges Alkalichlorit, insbesondere Natriumchlorit, verwendet werden.

13. Verfahren gemäß Anspruch 11 oder 12, **dadurch gekennzeichnet, dass** Luft, Kohlendioxid oder Stickstoff, vorzugsweise Luft, als Gas verwendet wird.

14. Verfahren gemäß einem der Ansprüche 11 bis 13, **dadurch gekennzeichnet, dass** die Wassermenge und Größe der Absorptionsvorrichtung so auf die Chlordioxidmenge und Gasgeschwindigkeit abgestimmt wird, dass sich im Wesentlichen das komplette Chlordioxid in dem Wasser löst, insbesondere in dem zur Pumpe zurückströmenden Gas weniger als 1 ppm Chlordioxid enthalten sind.

15. Verfahren gemäß einem der Ansprüche 11 bis 14, **dadurch gekennzeichnet, dass** die Edukte nacheinander oder vorvermischt auf einmal in den Reaktor eingefüllt werden.

16. Verfahren gemäß einem der Ansprüche 11 bis 14, **dadurch gekennzeichnet, dass** die Edukte kontinuierlich dem Reaktor zugeführt werden, vorzugsweise einem letzten Reaktor einer Kaskade mit mehreren zweischenkeligen Reaktoren, die eine gemeinsame Eduktzufuhr, Pumpe und Absorptionsvorrichtung haben, wobei die Pumpe an den Gaseinlass des ersten Reaktors angeschlossen ist während die Eduktzufuhr und Absorptionsvorrichtung an den letzten Reaktor angeschlossen sind und das Gas aus dem Gasauslass des ersten Reaktors in den Gaseinlass des zweiten Reaktors geführt wird usw., die Flüssigkeit aus dem letzten Reaktor in den vorletzten Reaktor geleitet wird usw., und die vollständig umgesetzte und entgaste Flüssigkeit aus dem ersten Reaktor abgeführt wird.

17. Verfahren gemäß einem der Ansprüche 11 bis 16, **dadurch gekennzeichnet, dass** die Edukte und das Wasser über elektrisch angetriebene Dosierventile zugeführt werden und mit einer Steuerung überwacht wird, dass Gasstrom, Edukt- und Wasserzufuhr in einem geeigneten Verhältnis stehen, wobei bei einem Ausfall der Pumpe oder der Wasserzufuhr oder einer der Eduktzuströme eine Notabschaltung erfolgt.

## Claims

1. Device for the production of chlorine dioxide comprising a twin-arm reactor (1, 1', 1") which has a cross-sectional area of the arms (2, 2', 2", 3, 3', 3") that is small in comparison to the height of the arms, wherein the arms are connected at top and bottom, a gas inlet (4, 4', 4") at the lower end of a first arm (2, 2', 2"), a gas outlet (5, 5', 5") in the upper region of the second arm (3, 3', 3"), a connection (V, V', V") between the arms (2, 2', 2", 3, 3', 3"), a reactant inlet (6, 6', 6") at the upper end of the first or second arm (2, 2', 2", 3, 3', 3"), a liquid outlet (7, 7', 7") at the lower end of the reactor (1, 1', 1"), an absorption device (8) with a water supply (9), a gas entry (10), a gas exit (11), and a product outlet (13), and a pump (12) for circulating a gas from the pump (12) via the gas inlet (4') through the first arm (2) to the gas outlet (5) and on to the gas entry (10) of the absorption device (8), through this to the gas exit (11) and to the pump (12), wherein the arm diameter, arm height, liquid level, and gas flow can be coordinated so that a stable liquid transport in the reactor (1, 1', 1") is adjustable.

2. Device according to claim 1, **characterized in that** electrically driven metering valves are provided for dosing the reactants, preferably with a safety circuit which stops the dosage of the reactants if the pump (12) for circulating the gas or a reactant metering device or the water supply (9) to the absorption device (8) fails.

3. Device according to claim 1 or 2, **characterized in that** several twin-arm reactors (1, 1', 1") are connected in series, preferably two, three, or four, wherein the pump (12) is connected to the first reactor (1) and the absorption device (8) is connected to the last reactor (1").

4. Device according to claim 1, 2, or 3, **characterized in that** the device has a pressure equalization mechanism (15), preferably a filter, in particular an activated carbon filter.

5. Device according to one of claims 1 to 4, **characterized in that** the arms (2, 2', 2", 3, 3', 3") have ratios of cross-sectional area to height in the range from 0.001 to 0.2 length units, preferably from 0.01 to 0.1 length units, and particularly preferred from 0.02 to 0.05.

6. Device according to one of claims 1 to 5, **characterized in that** the arms (2, 2', 2", 3, 3', 3") have cross-sectional areas from 0.5 to 20 cm², preferably from 1 to 10 cm², in particular from 2 to 5 cm², at heights from 10 to 500 cm, preferably from 50 to 120 cm, in particular from 70 to 100 cm.

7. Device according to one of claims 1 to 6, **characterized in that** the arms (2, 2', 2", 3, 3', 3") are tubes with a round, oval or angular, preferably round, cross-section and/or are made of glass or oxidation-stable and heat-resistant plastic, in particular of PVC or Teflon.

8. Device according to one of claims 1 to 7, **characterized in that** the absorption device (8) is a washing tower, preferably a tube filled with packing material such as glass balls or Raschig rings.

9. Device according to one of claims 1 to 8, **characterized in that** the water supply (9) is formed by one or more openings or by a nozzle.

10. Device according to one of claims 1 to 9, **characterized in that** the absorption device (8) has a siphon as a product outlet (13).

11. Method for the production of chlorine dioxide, **characterized in that**
- reactants for conversion to chlorine dioxide are introduced at the top into one arm of a twin-armed reactor, which has a cross-sectional area of the arms that is small compared to the arm height, the arms being connected at the top and bottom,
- gas is pumped into a first arm at the bottom and is discharged in the upper region of the second arm,
- wherein the amount of gas is dimensioned such that the liquid is circulated by the gas flow in the reactor, and
- the gas with the chlorine dioxide formed is passed from the reactor into an absorption device, where the chlorine dioxide contained therein is dissolved in water,
and
- the gas separated from the chlorine dioxide flows back from the absorption device into the pump.

12. Method according to claim 11, **characterized in that** solutions of chlorite and acid, preferably hydrochloric acid and aqueous alkali chlorite, in particular sodium chlorite, are used as reactants.

13. Method according to claim 11 or 12, **characterized in that** air, carbon dioxide, or nitrogen, preferably air, is used as the gas.

14. Method according to one of claims 11 to 13, **characterized in that** the amount of water and the size of the absorption device are adjusted to the amount of chlorine dioxide and gas velocity so that essentially all of the chlorine dioxide dissolves in the water, in particular so that the gas flowing back to the pump contains less than 1 ppm chlorine dioxide.

15. Method according to one of claims 11 to 14, **characterized in that** the reactants are fed into the reactor one after the other or premixed at once.

16. Method according to one of claims 11 to 14, **characterized in that** the reactants are continuously fed into the reactor, preferably into a final reactor of a cascade with several twin-arm reactors, which have a common reactant feed, pump, and absorption device, wherein the pump is connected to the gas inlet of the first reactor, while the reactant feed and absorption device are connected to the last reactor, and the gas from the gas outlet of the first reactor is fed into the gas inlet of the second reactor, etc., the liquid is fed from the last reactor into the penultimate reactor, etc., and the completely reacted and degassed liquid is discharged from the first reactor.

17. Method according to one of claims 11 to 16, **characterized in that** the reactants and the water are supplied via electrically driven metering valves and a control system monitors that the gas flow, reactant supply, and water supply are in a suitable ratio, wherein an emergency shutdown occurs in the event of a failure of the pump or the water supply or one of the reactant feed streams.

## Revendications

1. Procédé de fabrication de dioxyde de chlore comprenant un réacteur (1, 1', 1") à deux branches qui présente une section transversale des branches (2, 2', 2", 3, 3', 3") faible par rapport à la hauteur des branches, dans lequel les branches sont reliées en haut et en bas, une admission de gaz (4, 4', 4") dans la partie inférieure d'une première branche (2, 2', 2"), une évacuation de gaz (5, 5', 5") dans la partie supérieure de la seconde branche (3, 3', 3"), une liaison (V, V', V") des branches (2, 2', 2", 3, 3', 3"), une admission de produits de départ (6, 6', 6") à l'extrémité supérieure de la première ou de la seconde branche (2, 2', 2", 3, 3', 3"), une évacuation de fluide (7, 7', 7") à l'extrémité inférieure du réacteur (1, 1', 1"), un dispositif d'absorption (8) avec une arrivée d'eau (9), une entrée de gaz (10), une sortie de gaz (11) et une évacuation de produit (13), et une pompe (12) pour faire circuler un gaz de la pompe (12) par l'admission de gaz (4') à travers la première branche (2) vers l'évacuation de gaz (5) et ensuite vers l'entrée de gaz (10) du dispositif d'absorption (8), à travers celui-ci vers la sortie de gaz (11) et vers la pompe (12), dans lequel le diamètre de branche, la hauteur de branche, le niveau de fluide et le flux gazeux peuvent être coordonnés de façon à pouvoir régler un transport de fluide stable dans le réacteur (1, 1', 1").

2. Dispositif selon la revendication 1, **caractérisé en ce que** des soupapes de dosage à entraînement électrique sont présentes pour le dosage des produits de départs, de préférence avec un circuit de sécurité qui arrête le dosage des produits de départ si la pompe (12) pour faire circuler le gaz ou un dosage de produits de départ ou l'arrivée d'eau (9) dans le dispositif d'absorption (8) est défaillant.

3. Dispositif selon la revendication 1 ou 2, **caractérisé en ce que** plusieurs réacteurs (1, 1', 1") à deux branches sont montés en série, de préférence deux, trois ou quatre, dans lequel la pompe (12) est reliée au premier réacteur (1) et le dispositif d'absorption (8) est relié au dernier réacteur (1").

4. Dispositif selon la revendication 1, 2 ou 3, **caractérisé en ce que** le dispositif possède un mécanisme d'équilibrage de pression (15), de préférence un filtre, en particulier un filtre à charbon actif.

5. Dispositif selon l'une des revendications 1 à 4, **caractérisé en ce que** les branches (2, 2', 2", 3, 3', 3") présentent des rapports de section transversale à des hauteurs dans la plage de 0,001 à 0,2 unités de longueur, de préférence de 0,01 à 0,1 unités de longueur et particulièrement de préférence de 0,02 à 0,05.

6. Dispositif selon l'une des revendications 1 à 5, **caractérisé en ce que** les branches (2, 2', 2", 3, 3', 3") présentent des sections transversales de 0,5 à 20 cm², de préférence de 1 à 10 cm², en particulier de 2 à 5 cm², pour des hauteurs de 10 à 500 cm, de préférence de 50 à 120 cm, en particulier de 70 à 100 cm.

7. Dispositif selon l'une des revendications 1 à 6, **caractérisé en ce que** les branches (2, 2', 2", 3, 3', 3") sont des tubes de section ronde, ovale ou carrée, de préférence ronde, et/ou sont en verre ou en plastique résistant à l'oxydation et à la chaleur, en particulier en PVC ou téflon.

8. Dispositif selon l'une des revendications 1 à 7, **caractérisé en ce que** le dispositif d'absorption (8) est une tour de lavage, de préférence un tube rempli de corps de remplissage comme des billes de verre ou des anneaux de Raschig.

9. Dispositif selon l'une des revendications 1 à 8, **caractérisé en ce que** l'arrivée d'eau (9) est formée par une ou plusieurs ouverture(s) ou par une buse.

10. Dispositif selon l'une des revendications 1 à 9, **caractérisé en ce que** le dispositif d'absorption (8) présente un siphon comme évacuation de produit (13).

11. Procédé de fabrication de dioxyde de chlore, **caractérisé en ce que**
- des produits pour la conversion en dioxyde de chlore sont introduits par le haut dans une branche d'un réacteur à deux branches qui présente une section transversale des branches faible par rapport à la hauteur des branches, dans lequel les branches sont reliées en haut et en bas,
- du gaz est pompé par le bas dans une première branche, et évacué dans la partie supérieure de la seconde branche,
- dans lequel la quantité de gaz est ainsi mesurée que le fluide est transporté à travers le flux gazeux dans le réacteur et
- le gaz avec le dioxyde de chlore formé est sorti du réacteur et amené dans un dispositif d'absorption où le dioxyde de chlore contenu est dissous dans l'eau
et
- le gaz séparé du dioxyde de chlore est renvoyé du dispositif d'absorption dans la pompe.

12. Dispositif selon la revendication 11, **caractérisé en ce que** des solutions de chlorite et d'acide, de préférence d'acide chlorhydrique et de chlorite d'alcali aqueux, en particulier de chlorite de sodium, sont employées.

13. Procédé selon la revendication 11 ou 12, **caractérisé en ce que** de l'air, du dioxyde de carbone ou de l'azote, de préférence de l'air, est employé comme gaz.

14. Procédé selon l'une des revendications 11 à 13, **caractérisé en ce que** la quantité d'eau et la taille du dispositif d'absorption sont ainsi coordonnés à la quantité de dioxyde de chlore et à la vitesse du gaz qu'essentiellement le dioxyde de chlore complet se dissout dans l'eau, en particulier, le gaz revenant vers la pompe contient moins de 1 ppm de dioxyde de chlore.

15. Procédé selon l'une des revendications 11 à 14, **caractérisé en ce que** les produits de départ sont remplis l'un après l'autre ou prémélangés en une fois dans le réacteur.

16. Procédé selon l'une des revendications 11 à 14, **caractérisé en ce que** les produits de départ sont amenés en continu au réacteur, de préférence à un dernier réacteur d'une cascade de plusieurs réacteurs à deux branches qui ont une arrivée de produits de départ, une pompe et un dispositif d'absorption communs, dans lequel la pompe est raccordée à l'admission de gaz du premier réacteur tandis que l'arrivée de produits de départ et le dispositif d'absorption sont raccordés au dernier réacteur et le gaz sortant de l'évacuation de gaz du premier réacteur est dirigé dans l'admission de gaz du second réacteur, etc. le fluide est dirigé du dernier réacteur dans l'avant-dernier réacteur, etc., et le fluide entièrement converti et dégazé est évacué du premier réacteur.

17. Procédé selon l'une des revendications 11 à 16, **caractérisé en ce que** les produits de départ et l'eau sont amenés par des soupapes de dosage à entraînement électrique et une commande surveille que le flux gazeux, l'arrivée de produits de départ et d'eau soient dans un rapport approprié, dans lequel en cas de défaillance de la pompe ou de l'arrivée d'eau ou d'un des flux d'amenée de produits de départ, il y ait une coupure d'urgence.
